# EUROPÄISCHE PATENTSCHRIFT

(11) **EP 3 577 047 B1**
(45) Veröffentlichungstag und Bekanntmachung des Hinweises auf die Patenterteilung: **02.08.2023**
(21) Anmeldenummer: 18703369.1
(22) Anmeldetag: 25.01.2018
(51) Int. Cl.: B65G 47/61, B65G 47/38

(54) **VORRICHTUNG ZUM ENTLEEREN HÄNGEND GEFÖRDERTER TRANSPORTTASCHEN**
DEVICE FOR EMPTYING TRANSPORT BAGS CONVEYED IN A SUSPENDED MANNER
DISPOSITIF DE VIDAGE DE SACS DE TRANSPORT ACHEMINÉS SUSPENDUS

(30) Priorität: 31.01.2017 CH 1092017
(43) Veröffentlichungstag der Anmeldung: 11.12.2019
(73) Patentinhaber: Ferag AG, 8340 Hinwil (CH)
(72) Erfinder: FENILE, Roberto, 8623 Wetzikon (CH); STAUBER, Erwin, 8624 Grüt (CH)
(74) Vertreter: IPrime Rentsch Kaelin AG
(86) Internationale Anmeldenummer: PCT/IB2018/050446
(87) Internationale Veröffentlichungsnummer: WO 2018/142243

(56) Entgegenhaltungen:
- EP-A1- 0 050 245
- EP-A2- 2 196 415
- WO-A2-90/03853
- DE-A1-102012 018 925
- DE-U1-202012 012 331
- JP-A- H04 339 744
- JP-Y1- S4 611 228
- SU-A1- 1 169 904
- US-A- 2 643 761
- US-A- 2 992 721

## Beschreibung

### Technisches Gebiet

Die vorliegende Erfindung bezieht sich auf das Gebiet der Transport- und Fördertechnik. Sie betrifft eine Vorrichtung zum Entleeren von hängend geförderten Transporttaschen.

### Technologischer Hintergrund

In automatisierten Warenlagern, weitläufigen Produktionsstätten und ganz allgemein bei der Förderung und dem Transport von Waren haben sich Hängefördersysteme als ein effizientes Mittel für den Transport, die Zwischenpufferung, aber auch die langfristige Lagerung verschiedener Arten von Waren erwiesen. Bei Hängefördersystemen werden die Waren entweder auf geeignete Weise direkt an einzelnen Förderelementen eines Fördersystems aufgehängt, oder in entsprechende Transportelemente wie beispielsweise Transporttaschen eingebracht, die wiederum hängend an den Förderelementen gelagert sind.

Hängefördersysteme können als Transportkettenanlagen realisiert sein, bei welchen eine Vielzahl von Förderelementen Glieder einer Kette bilden, die entlang eines Förderweg bewegt wird.

Ebenfalls bekannt sind schwerkraftgeförderte Fördersysteme, bei welchen sich einzelne mit Rädern ausgestattete Förderelemente auf entsprechenden Laufschienen bewegen. Ein Beispiel eines solchen schwerkraftgeförderten, schienengeführten Fördersystems ist aus der WO 2016/030275 A1 der Anmelderin bekannt.

Hängefördersysteme mit Transportelementen sind besonders geeignet für die effiziente Förderung von heterogenen Stückgut-Waren, wie beispielsweise Werkstücken in Produktionsprozessen, Ersatzteilen, Konsumgütern wie Büchern, Kleidern, Schuhen, etc. So können beispielsweise in Logistikzentren von Versandhandelsfirmen Hängefördersysteme verwendet werden, um eine Vielzahl von Artikeln verschiedener Grösse und Gewicht einzulagern, und Gruppen von Artikeln gemäss den jeweiligen Kundenaufträgen zu kommissionieren und für den Versand bereitzustellen.

Ein für ein Hängefördersystem relevanter Aspekt ist dabei das einfache, reibungslose und effiziente Einbringen von Waren in leere Transportelemente und Entnehmen der Waren aus dem Transportelementen.

Ein manuelles Entnehmen der Waren aus den Transporttaschen erlaubt eine flexible Handhabung verschiedener Waren, ist jedoch langsam und kostenintensiv.

Es besteht allgemein das Bedürfnis nach Fortschritten in diesem Gebiet der Technik.

JP S46-11228 zeigt eine Vorrichtung zur automatisierten Übergabe von Gepäckstücken von einem Hängeförderer, bei welchem die Gepäckstücke an einem Traghaken hängend gefördert werden, auf einen an Boden angeordneten Bandförderer. Der Hängeförderer verläuft in einem ersten Abschnitt von einem Förderniveau her abfallend, und in einem zweiten Abschnitt auf einem tieferen Niveau waagrecht. Der Bandförderer, welcher zwei parallele umlaufende Förderriemen umfasst, verläuft in dem ersten Abschnitt leicht ansteigend, und im zweiten Abschnitt waagrecht unterhalb des Hängeförderers. Der Bandförderer hat eine höhere Fördergeschwindigkeit als der Hängeförderer. Wenn ein am Traghaken des Hängeförderers hängendes Gepäckstück bei der Förderung entlang des ersten Abschnitts den Bandförderer berührt, wird dieses vom Bandförderer in Förderrichtung mitgezogen, bis es mit der Rückseite auf dem Bandförderer liegt. Der Traghaken koppelt sich dann am Ende des ersten Abschnitts automatisch vom Gepäckstück ab, und dieses wird anschliessend im zweiten Abschnitt auf dem Bandförderer wegbefördert.

SU 1169904 A offenbart eine Vorrichtung zum Entfernen von hängend transportierten Beuteln von Greifern eines Hängefördersystems. Ein mit einer bestimmten Neigung ansteigender Bandförderer ist unterhalb eines horizontal laufenden Hängeförderers angeordnet. Die Fördergeschwindigkeit des Bandförderers ist geringer als die Fördergeschwindigkeit des Hängeförderers. Der Förderweg des Bandförderers verläuft windschief zum Förderweg des Hängeförderers. Der Beutel kommt zu Beginn des ansteigendes Abschnitts des Bandförderers mit diesem in Kontakt, und kommt in Förderrichtung gesehen nach hinten auf diesem zu liegen. Die Greifer werden geöffnet, und die aus dem Bereich des Hängeförderers beförderten Beutel werden verschlossen und verpackt.

EP 0050245 A1 zeigt eine Vorrichtung zum automatischen Abhängen von hängend geförderten Lasten von einem Laufwagen eines Hängefördersystems. Die Last wird von einem geneigten Bandförderer leicht angehoben und liegt anschliessend auf dem horizontal weiterlaufenden Bandförderer, der parallel zum horizontal laufenden Hängefördersystem verläuft. Die Traghaken des Laufwagens werden in Förderrichtung nach hinten weggeschwenkt und so von Tragösen der Last abgekoppelt.

US 2992721 zeigt ein System zum Beladen und Entladen von hängenden Transporteinheiten eines umlaufenden Hängefördersystems. Neu gegossene Zementblöcke werden auf einem horizontalen Bandförderer aus der Giessanlage zugefördert, und mitsamt einer Unterlage von den Transporteinheiten des ansteigenden und gegenläufigen Hängeförderers aufgenommen. Nachdem die Zementblöcke auf dem umlaufenden Hängeförderer ausgehärtet sind, erfolgt analog die Übergabe von den Transporteinheiten des abfallenden Hängeförderers auf einen gegenläufigen Bandförderer.

JP H04/339744 zeigt eine Vorrichtung zur Übernahme von Beuteln von einem Hängefördersystem. Das Hängefördersystem weist im Übergabebereich ein Gefälle gegenüber einem horizontalen Bandförderer auf, welcher die Beutel nach dem Ablegen auf dem Bandförderer und der Abkopplung vom Hängefördersystem weiterfördert.

US 2643761 zeigt eine Vorrichtung zum Entladen von ringartigen Teilen von Tragehaken eines Hängefördersystems auf eine abschüssige Rollenbahn. Die Tragehaken nähern sich auf dem abfallenden Hängefördersystem der Rollenbahn von oben. Nachdem ein ringartiges Teil auf der abschüssigen Rollenbahn abgelegt ist, beschleunigt es auf dieser aufgrund seiner Gewichtskraft, so dass sich der Tragehaken vom ringartigen Teil löst.

WO 90/03853 A2 zeigt eine Vorrichtung zum Einbringen von Gütern in Förderelemente eines Hängeförderers. Ein gabelartiges Halteelement eines umlaufenden Kettenförderers übernimmt ein Objekt von einem ersten Fördersystem und übergibt es an ein gabelartiges Halteelement des Förderelements des Hängeförderers, welches das Objekt klemmend hält.

EP 2196415 A2 zeigt eine Vorrichtung zum Befüllen von hängend geförderten Transporttaschen. Eine Transporttasche wird mittels Kulissenführungen geöffnet, und eins mittels Bandförderer zugeführte Stückguteinheit wird durch eine obere Öffnung der Transporttasche eingeworfen.

DE 102012018925 A1 zeigt eine Vorrichtung zum Entleeren von hängend geförderten Transporttaschen, gemäß dem Oberbegriff des Anspruchs 1. Eine Transporttasche wird auf einem Hängefördersystem zugefördert. Das untere Ende der Transporttasche wird Aktuatoren angehoben, so dass die Transporttasche schräg über Kopf steht. Eine Stückguteinheit in der Transporttasche gleitet auf einer Vorderwand aus der Transporttasche und fällt auf einen abwärts geneigten Bandförderer.

DE 202012012331 U1 zeigt eine hängend förderbare Transporttasche und eine Vorrichtung zum Befüllen solcher Transporttaschen. Eine entsprechende Transporttasche wird auf einem abfallenden Abschnitt eines Hängefördersystems schwerkraftgetrieben beschleunigt und trifft auf ein Hindernis. Die Transporttasche wird horizontal weitergefördert und die Transporttasche wird durch das Hindernis aufgeklappt.

### Darstellung der Erfindung

Es ist eine Aufgabe der Erfindung, eine Vorrichtung zum Entleeren von hängend geförderten Transporttaschen bereit zu stellen, welche eine einfache und effiziente Entleerung der Transporttaschen erlaubt.

Diese und andere Aufgaben werden gelöst durch eine erfindungsgemässe Vorrichtung gemäss dem unabhängigen Anspruch. Weitere bevorzugte Ausführungsformen sind in den abhängigen Ansprüchen gegeben.

Eine erfindungsgemässe Vorrichtung zum Entleeren von hängend geförderten Transporttaschen umfasst ein Fördersystem, insbesondere ein schienengeführtes Fördersystem oder ein Förderkettensystem, mit welchem Transporttaschen hängend entlang einem Förderweg zugeführt werden können, wobei die Transporttaschen eine im befüllten Zustand nach oben offene Tasche mit einer Vorderseite aufweisen. Die Vorrichtung umfasst weiter ein umlaufendes Förderband zur Übernahme von in den Transporttaschen transportierten Stückguteinheiten. In einem Kontaktabschnitt sind der Förderweg des Fördersystems und der Förderweg des Förderbands derart zueinander angeordnet, dass der Abstand des Förderwegs des Fördersystems und des Förderwegs des Förderbands kontinuierlich kleiner wird, so dass bei der Förderung einer Transporttasche entlang des Kontaktabschnitts die Vorderseite der Tasche der Transporttasche das Förderband kontaktiert und auf diesem zu liegen kommt und dabei die Transporttasche nach hinten geschwenkt wird.

Die Transporttaschen können schwenkbar an Förderelementen des Fördersystems aufgehängt sein.

Unter Transporttaschen können im Sinne dieser Beschreibung alle Transportelemente verstanden werden, welche im Sinne des nachfolgend beschriebenen technischen Prinzips der erfindungsgemässen Vorrichtung eingesetzt werden können, beispielsweise Transportkisten mit stabilen Wänden oder Leichtbaugestänge mit dazwischen gespannten textilen Wandungen, etc.

Bei einer erfindungsgemässen Vorrichtung verlaufen in einem Übergabeabschnitt der Förderweg des Fördersystems und der Förderweg des Förderbands im Wesentlichen parallel zueinander mit einem gewissen Gefälle nach unten. Die Vorderseite der Tasche einer Transporttasche liegt bei der Förderung entlang des Übergabeanschnitts weiterhin auf dem Förderband, so dass die Öffnung der Tasche der Transporttasche schräg nach unten orientiert ist, und in der Tasche der Transporttasche vorhandene Stückguteinheiten schwerkraftgetrieben aus der Tasche auf das Förderband gleiten.

Der Übergabeabschnitt kann an den Kontaktabschnitt anschliessen, und/oder teilweise mit dem Kontaktabschnitt überlappen.

Besonders vorteilhaft wird bei der vorgenannten Vorrichtung in einem Trennabschnitt der Abstand des Förderwegs des Fördersystems und des Förderwegs des Förderbands kontinuierlich grösser, so dass bei der Förderung einer Transporttasche entlang des Trennabschnitts die entleerte Transporttasche vom Förderband abgehoben wird und in die frei hängende Lage zurück schwenkt.

Der Trennabschnitt kann an den Übergabeabschnitt anschliessen, und/oder teilweise mit dem Übergabeabschnitt überlappen.

Bei den vorgenannten Vorrichtungen sind vorteilhaft die Fördergeschwindigkeiten des Förderbandes und des Fördersystems gleich hoch.

Das Förderband der Vorrichtung weist vorteilhaft eine Mehrzahl von entlang einem Umfang des Förderbands gleichmässig beabstandet angeordneten, nach aussen gerichteten, transversalen Rippen auf.

Bei einer solchen Vorrichtung ist vorteilhaft die relative Lage der Rippen und der Transporttaschen zueinander so gewählt, dass im Kontaktabschnitt eine Rippe zur Transporttasche aufholt, den Bodenabschnitt der Transporttasche kontaktiert und diesen in Förderrichtung nach vorne schiebt, bis die Transporttasche in einen Zustand zum Entleeren übergegangen ist.

Der Abstand der Rippen ist vorteilhaft so gewählt, dass während der Förderung einer Transporttasche entlang des Übergabeabschnitts in der Tasche der Transporttasche vorhandene Stückguteinheiten schwerkraftgetrieben aus der Tasche auf das Förderband gleiten, und auf dem Förderband schwerkraftunterstützt weiter nach unten gleiten, bis sie von der der Transporttasche vorauslaufenden Rippe aufgefangen und gehalten werden.

Vorteilhaft bestehen bei den vorgenannten Vorrichtungen die Rippen des Förderbandes aus einer Vielzahl paralleler Finger.

Besonders vorteilhaft umfasst eine solche Vorrichtung eine an das Förderband anschliessende Rutsche, wobei ein oberes Ende der Rutsche Schlitze aufweist, deren Lage den Fingern der Rippen des Förderbandes entsprechen, so dass beim Umlenken des Förderbandes die Finger der Rippen und die Schlitze der Rutsche kämmend miteinander wechselwirken und jeweils hinter einer Rippe zurückgehaltene Stückguteinheiten getaktet freigeben werden, die anschliessend auf der Rutsche schwerkraftgetrieben weiterbefördert werden.

Vorteilhaft weist eine solche Vorrichtung einen weiteren Förderer auf, der die freigegebenen Stückguteinheiten von der Rutsche übernimmt.

Bei den oben genannten Vorrichtungen werden vorteilhaft Vibrationsmittel vorgesehen, mit welchen mindestens in einem Teilabschnitt des Förderbands die Oberfläche des Förderbands in Vibrationen oder Schwingungen versetzt werden kann.

Die entsprechenden Vibrationen oder Schwingungen können unterstützend zur Schwerkraft gegebenenfalls verklemmte Waren aus der Tasche der Transporttasche lösen, und/oder das Gleiten der Waren auf dem Förderband bis zur nächsten darunterliegenden Rippe unterstützen.

Die Transporttaschen einer der oben genannten Vorrichtungen weisen vorteilhaft eine versteifte Rückwand auf.

Die Transporttaschen einer der oben genannten Vorrichtungen umfassen vorteilhaft eine Rückwand und eine Vorderwand, die über einen Bodenabschnitt derart flexibel miteinander verbunden sind, dass sie zwischen einem ersten Zustand, in welcher sie eine oben offene und von oben befüllbare Tasche bilden, und einem zweiten Zustand, in welcher sie dicht nebeneinander liegen und eine zusammengefaltete Tasche bilden, hin und her bewegbar sind.

Besonders vorteilhaft ist die Rückwand der Transporttasche nach oben über die Höhe der Vorderwand hinaus mit einem Tragabschnitt zum Befestigen der Transporttasche an dem Förderelement verlängert.

### Kurze Beschreibung der Zeichnungen

Zum besseren Verständnis der vorliegenden Erfindung wird nachfolgend auf die Zeichnungen Bezug genommen. Diese zeigen lediglich Ausführungsbeispiele des Erfindungsgegenstands.

In den Figuren und der dazugehörigen Beschreibung sind gleiche oder gleich wirkende Teile mit den gleichen Bezugszeichen versehen.

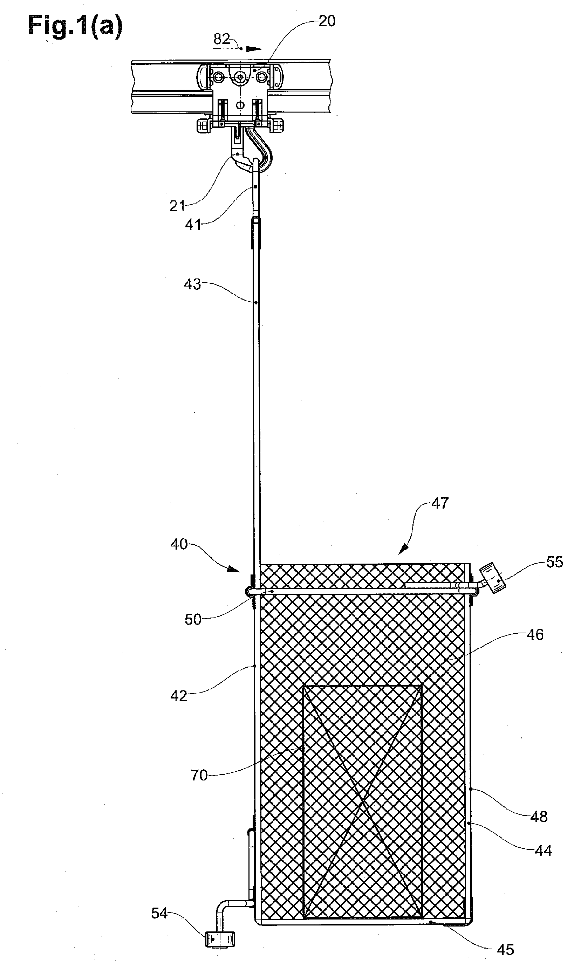

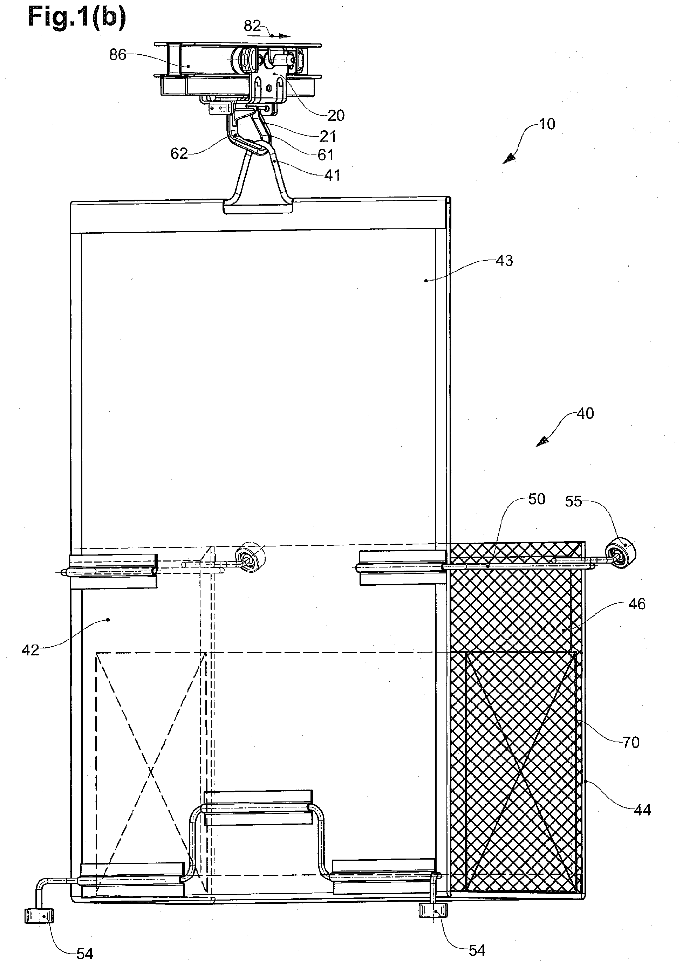

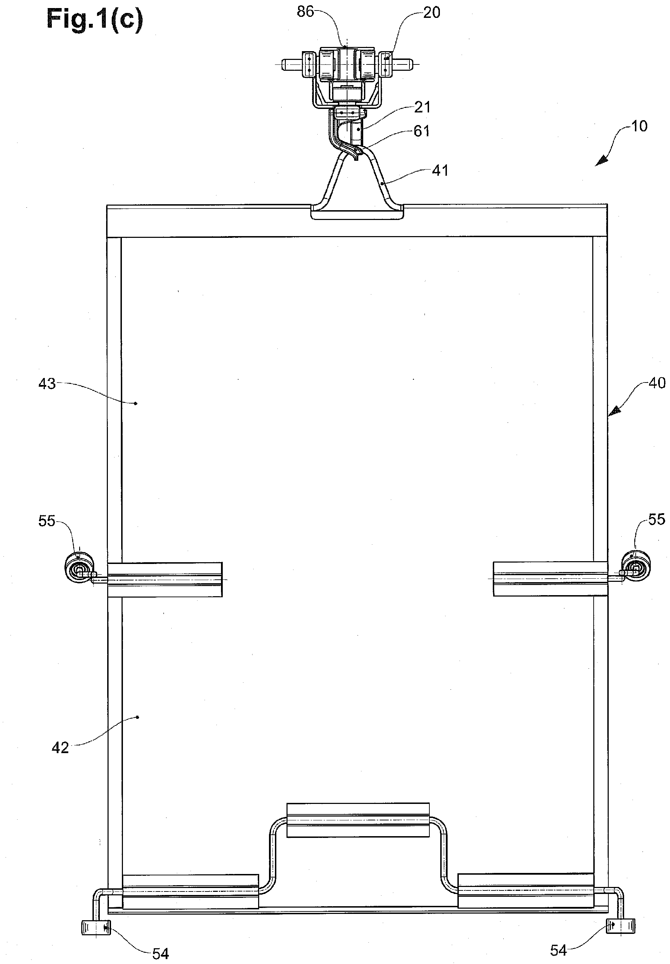

- Figur 1: zeigt schematisch eine offenbarte Fördereinheit eines Fördersystems, mit einer Transporttasche quer zur Förderrichtung, befüllt mit einer Stückguteinheit, (a) in einer Seitenansicht der Transporttasche mit Förderrichtung nach rechts; (b) in einer Ansicht der Transporttasche von schräg hinten; und (c) in einer Rückansicht der Transporttasche mit Blick in Förderrichtung.

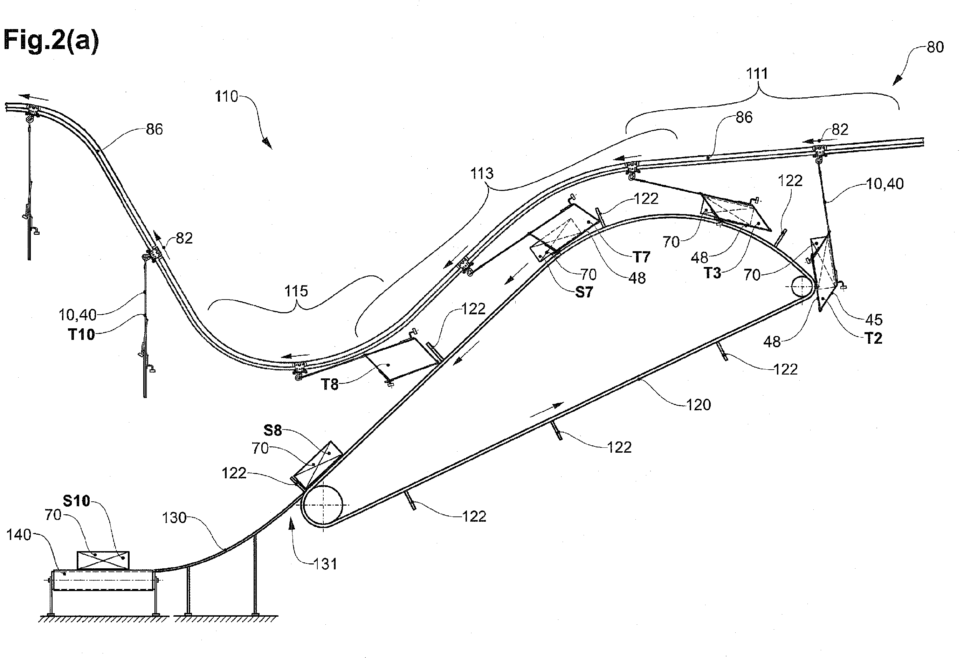

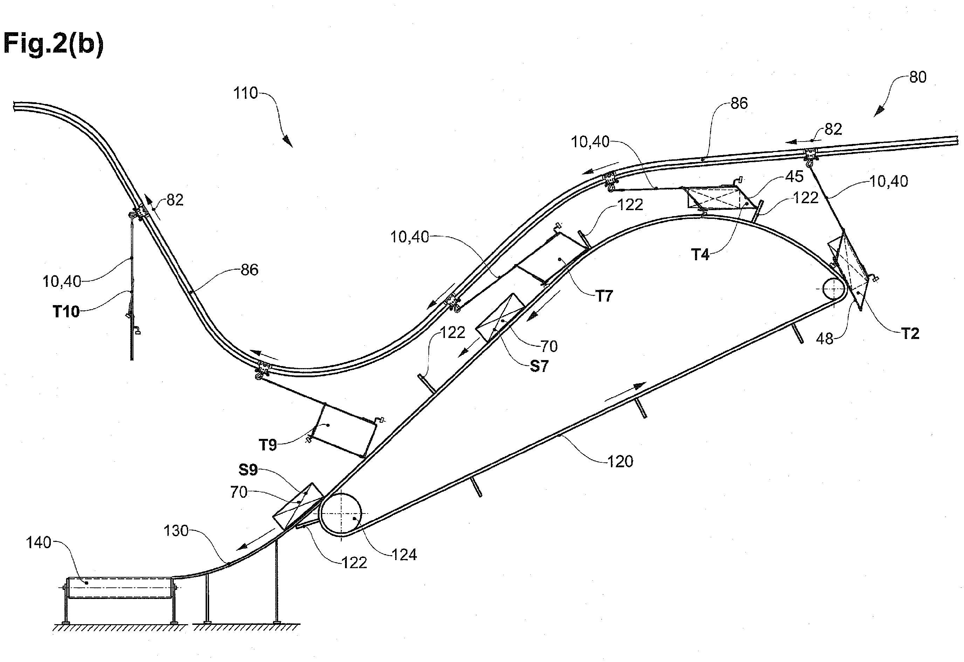

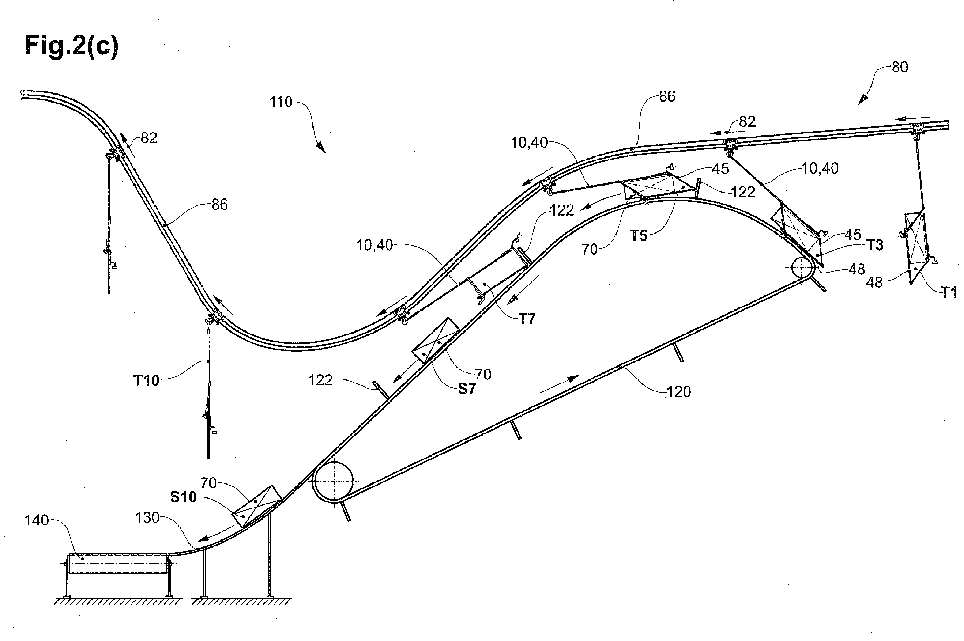

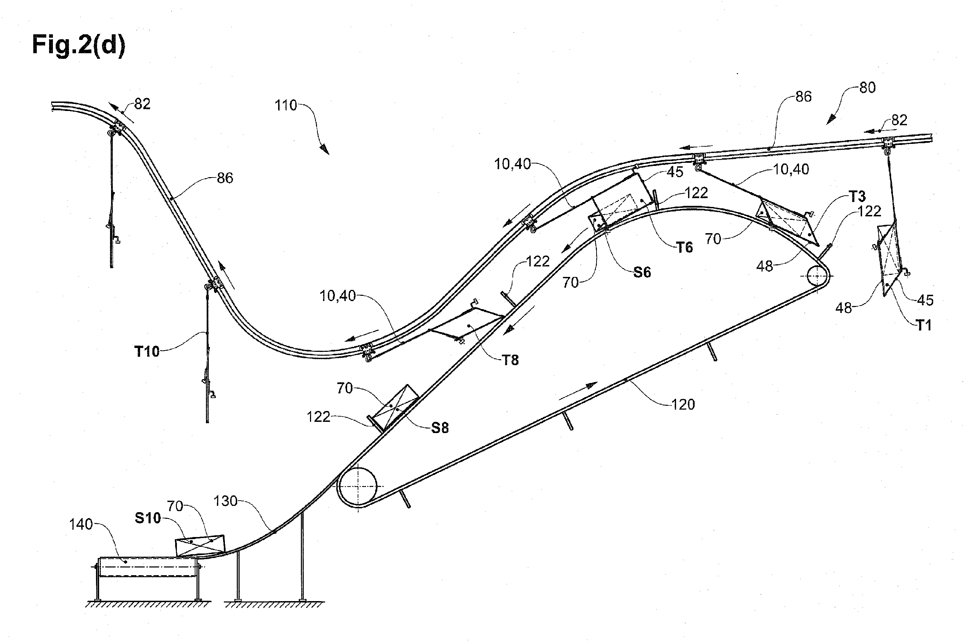

- Figur 2: zeigt schematisch eine mögliche Ausführungsform einer erfindungsgemässen Vorrichtung zum Entleeren von hängend geförderten Transporttaschen, in aufeinanderfolgenden Phasen (a), (b), (c), (d) eines Teilzyklus.

### Wege zur Ausführung der Erfindung

Eine Fördereinheit 10 wie sie in einer erfindungsgemässen Vorrichtung zum Entleeren von hängend geförderten Transporttaschen verwendet werden kann, ist in Figur 1 dargestellt. Ein Transportelement 40 in Form einer Transporttasche hat einen Aufhängehaken 41, der in einen Traghaken 21 eines Förderelements 20 eingehängt ist. Das Förderelement ist im gezeigten Beispiel ein Laufwagen einer schwerkraftgeförderten Hängeförderanlage, analog zu einer Hängeförderanlage wie sie beispielsweise in der WO 2016/030275 A1 der Anmelderin offenbart ist. Zum besseren Verständnis ist der Laufwagen 20 auf einer Laufschiene 86 eines Fördersystems dargestellt, wo er sich in eine vorgesehene Förderrichtung 82 bewegt.

Die Transporttasche umfasst eine Vorderwand 44, einen Bodenabschnitt 45 sowie eine Rückwand 42, die an den zusammenstossenden Kanten schwenkbar verbunden sind. Vorderwand, Rückwand und Bogenabschnitt sind stabil ausgestaltet, und können bspw. aus einem geeigneten Plastikmaterial gefertigt sein, beispielsweise einer Hohlprofilplatte. Flexibel ausgestaltete Seitenwände 46 verbinden Vorderwand, Rückwand und Bodenabschnitt, so dass eine Tasche 47 mit einer Öffnung resultiert, in die mindestens eine Stückguteinheit 70 geladen werden kann. Im gezeigten Beispiel sind die Seitenwände aus einem feinmaschigen Netz gefertigt. Möglich ist auch die Verwendung eines flexiblen Textilmaterials. Die Seitenwände 46 sind so ausgestaltet, dass sie bei einem Zusammenfalten der Transporttasche wie unten beschrieben ebenfalls zusammengefaltet werden können.

Zwischen Vorderwand 44 und Rückwand 42 ist auf jeder Seite ein schwenkbar befestigter Distanzhalter 50 in Form eines Drahtbügels angeordnet. Die Distanzhalter 50 sind im Wesentlichen parallel zum Bodenabschnitt 45 angeordnet und gleich lang wie der Bodenabschnitt, und die Vorderwand 44 liegt im Wesentlichen parallel zur Rückwand 42, so dass entsprechend Rückwand 42, Distanzhalter 50, Vorderwand 44 und Bodenabschnitt 45 ein Parallelogramm bilden.

Im unbeladenen Zustand lässt das Gewicht von Vorderwand und Bodenabschnitt die Vorderwand nach unten sinken, so dass die Transporttasche in einen zweiten Zustand übergeht, in welchem Vorderwand und Rückwand nahe beieinander liegen.

In dieser Konfiguration kann die Transporttasche platzsparend in einem Fördersystem aufbewahrt werden, indem die Fördereinheiten auf einer Laufschiene bündig hintereinander aufgereiht werden.

Durch Anheben der Vorderwand 44 und/oder des Bodenabschnitts 45 gegenüber der Rückwand 42 kann die Transporttasche von dem zweiten, zusammengefalteten Zustand in einen ersten, entfalteten Zustand überführt werden, wie er in Figur 1 gezeigt ist. Die nach oben gerichtete Öffnung der Tasche 47 der Transporttasche 40 ist nun in einem befüllbereiten Zustand.

Im gezeigten Ausführungsbeispiel ist in der Tasche 47 der Transporttasche 40 eine Stückguteinheit angeordnet, schematisch dargestellt durch ein quaderförmiges Objekt 70.

An einem unteren Ende der Rückwand 42 sind zwei Führungsrollen 54 angeordnet. Diese können dazu verwendet werden, die Transporttasche 40 bei der Förderung in einem Fördersystem bei der Verschiebung entlang der Förderrichtung 82 zusätzlich zu bewegen, indem beispielsweise eine oder beide Führungsrollen in einer Kulisse geführt werden. Analog können die zwei an einem oberen Ende der Vorderwand 44 angebrachten Führungsrollen 55 dazu verwendet werden, die Vorderwand 42 anzuheben.

Die Rückwand 42 ist an ihrem oberen Ende in einen Tragabschnitt 43 verlängert, an dessen oberem Ende der Aufhängehaken 41 in Form eines Drahtbügels schwenkbar mit der Rückwand 42 bzw. dessen Tragabschnitt 43 verbunden ist. Der Bügel des Aufhängehakens 41 definiert eine Orientierungs-Ebene des Aufhängehakens, und damit der ganzen Transporttasche.

Der Traghaken 21 ist an einem von der Laufschiene 86 abgewandten unteren Ende des Laufwagens 20 angebracht. Er kann aus Metall gefertigt sein, oder aus einem geeigneten Polymermaterial, beispielsweise einem glasfaserverstärkten Thermoplastmaterial. In der Figur 1 dargestellt befindet sich der Aufhängehaken 41 in einer stabilen Position, bei welcher der Aufhängehaken in einem Minimum der potentiellen Energie gelagert ist. In dieser stabilen Position ist der Aufhängehaken 41 in einer Ebene quer zur Förderrichtung 82 ausgerichtet, und eine Vorderseite 48 der Tasche der Transporttasche blickt in Förderrichtung 82.

Eine mögliche Ausgestaltungsform einer erfindungsgemässen Vorrichtung 110 zum Entleeren von hängend geförderten Transporttaschen 40 ist in Figur 2 dargestellt, in vier verschiedenen Phasen (a), (b), (c), (d) des kontinuierlichen Gesamtprozesses. Nachfolgend werden die verschiedenen Vorgänge im Betrieb der Vorrichtung erläutert. Die Vorrichtung 110 erlaubt die automatisierte Entleerung von Transporttaschen 40 im kontinuierlichen Betrieb, sowie die getaktete Weitergabe der entnommenen Stückgutwaren 70 zur weiteren Verarbeitung.

Die dargestellte Entleerungs-Vorrichtung 110 ist Teil eines Fördersystems 80 zur hängenden Förderung von Transporttaschen 40. Ein solches Fördersystem kann als Transportkettenförderer ausgestaltet sein, oder als schwerkraftgeförderte Hängeförderanlage. Funktionell ist dies für die erfindungsgemässe Vorrichtung 110 nicht relevant, da in jedem Fall die einzelnen Fördereinheiten 10 mit den Transporttaschen 40 im Bereich der Entleerungs-Vorrichtung 110 mit einer bestimmten, konstanten Geschwindigkeit zwangsgefördert werden. Im Falle einer schwerkraftgeförderten Hängeförderanlage geschieht dies durch eine parallel zur Laufschiene 86 verlaufende Förderkettenanlage (nicht dargestellt), welche die einzelnen Laufwagen 20 mit den Transporttaschen 40 entlang dem Förderweg des Fördersystems 80 mitschleppt.

Der Förderweg des Fördersystems 80 verläuft in Förderrichtung 82 von rechts nach links. Unterhalb des Fördersystems 80 ist ein im Gegenuhrzeigersinn umlaufendes Förderband 120 angeordnet, dessen tangentiale Fördergeschwindigkeit gleich hoch ist wie die Fördergeschwindigkeit des Fördersystems. Auf dem Förderband 120 sind entlang des Umfangs in regelmässigen Abständen transversale Rippen 122 angeordnet.

In einem ersten Schritt wird eine zugeführte Transporttasche 40 auf dem Förderband 120 abgelegt und in einen Zustand überführt, in welchem die Waren aus der Tasche entnommen werden können. Eine befüllte Transporttasche 40, T1 wird von rechts her zugeführt [Figuren 2(c), (d)]. Die Vorderwand der Tasche wird dabei durch das Eigengewicht der Vorderwand, des Bodenabschnitts und der Stückgutware nach unten gezogen, so dass der Abstand zwischen Rückwand und Vorderwand im durch das Stückgut vorgegebenen Rahmen minimal ist.

Die Vorderseite 48 der Tasche 40, T2, nämlich die Vorderwand 44, trifft schliesslich auf das umlaufende Förderband 120 [Figuren 2(a), (b)], und wird in Bezug auf die Förderrichtung 82 nach hinten geschwenkt. Dies markiert den Beginn eines Kontaktabschnitts 111 der Vorrichtung 110.

Das Förderband 120 weist in diesem Abschnitt eine flacher werdende Steigung auf, während die Laufschiene des Fördersystems 80 ein konstantes Gefälle nach links aufweist. Es resultiert für das Förderband eine geringere horizontale Geschwindigkeitskomponente als für das Fördersystem. Schliesslich verlaufen gegen Ende des Kontaktabschnitts 111 der Förderweg des Förderbands 120 und der Förderweg des Fördersystems 80 im Wesentlichen parallel, und die horizontalen Geschwindigkeitskomponenten haben sich aneinander angepasst.

Es ist zu bemerken, dass die absoluten Geschwindigkeiten von Förderband und Fördersystem gleich hoch sind, und sich nicht ändern. Lediglich die horizontalen Geschwindigkeitskomponenten unterscheiden sich an den verschiedenen Positionen entlang des Förderwegs.

Die Abstände der transversalen Rippen 122 entspricht im Wesentlichen den Abständen der Laufwagen 20 auf dem Fördersystem 80. Die relative Phasenverschiebung der Rippen 122 in Bezug auf die Laufwagen 20 ist so gewählt, dass eine Rippe im Kontaktabschnitt hinter der Transporttasche 40, T3 läuft [Figuren 2(c), (d), (a)], und dabei langsam zur Transporttasche 40 aufholt, bis schliesslich die Rippe den Bodenabschnitt 45 der Transporttasche 40, T4 erreicht [Figur 2(b)]. In diesem Bereich bewegt sich die Rippe horizontal schneller als die Transportasche, deren Laufwagen bereits einen Bereich eines grösser werdenden Gefälles erreicht hat. Die Rippe 122 schiebt nun den Bodenabschnitt 45 der Tasche 40, T5 nach vorne [Figur 2(c)], so dass sich der Abstand zwischen Vorderwand 44 und Rückwand 42 vergrössert und die Transporttasche 40 schliesslich am Ende des Kontaktabschnitts 111 einen Zustand einnimmt, bei welchem die Transporttasche 40, T6 maximal geöffnet ist und entleert werden kann [Figur 2(d)]. Dies markiert das Ende des Kontaktabschnitts 111 und den Beginn des Übergabeabschnitts 113 der Vorrichtung 110.

Im Übergabeabschnitt 113 verlaufen die Förderwege des Fördersystems 80 und des Förderbands 120 parallel zueinander mit einem gewissen Gefälle. Fördersystem 80 und Förderband 120 weisen eine identische horizontale und auch vertikale Geschwindigkeitskomponente auf. Eine in der Transporttasche vorhandene Stückguteinheit 70, S6, S7 beginnt aus der Transporttasche 40, T6, T7 das Förderband 120 hinunter zu gleiten zu gleiten [Figuren 2(d), (a), (b), (c)], bis schliesslich die Stückguteinheit 70, S8 die davor laufende transversale Rippe 122 erreicht, und von dieser aufgehalten wird [Figuren 2(d), (a)].

Die entleerte Transporttasche 40, T7, T8 wird währenddessen wieder langsam vom Förderband 120 abgehoben, da der Förderweg des Fördersystems nach oben vom Förderweg des Förderbands 120 weg schwenkt [Figuren 2(c), (d), (a)]. Dies markiert das Ende des Übergabeabschnitts 113 und den Beginn des Trennabschnitts 115 der Vorrichtung 110. Schlussendlich hebt die leere Transporttasche 40, T9 vom Förderband 120 ab [Figur 2(b)]. Die leere Transporttasche 40, T10 schwenkt nun zurück in die frei hängende Lage und wird nach links oben weggeführt [Figuren 2(c), (d), (a), (b)], zur Wiederverwendung im Fördersystem 80.

Währenddessen erreicht die transversale Rippe zusammen mit der darauf liegenden Stückguteinheit 70, S8 das Ende des Förderbands 120 [Figur 2(a)].

Vorteilhaft bestehen die transversalen Rippen 120 aus einer Mehrzahl von nach aussen ragenden Fingern (in Figur 2 nicht sichtbar), die durch entsprechenden Schlitze (nicht sichtbar) in einer direkt an das Fliessband anschliessenden Rutsche 130 laufen. Auf diese Weise werden die Stückguteinheiten 70, S9 getaktet an die Rutsche 130 übergeben, sobald die Finger der Rippen 120 beim Erreichen der Umlenkrolle 124 durch die Schlitze der Rutsche 130 geschwenkt sind und das Stückgut nicht mehr zurückhalten [Figur 2(b)].

Die Stückguteinheit 70, S10, gleitet schwerkraftgetrieben die Rutsche 130 hinunter und landet schliesslich auf einem weiteren Förderer [Figuren 2(c), (d), (a)], im gezeigten Beispiel einem Förderband 140, welches das Stückgut quer zur Rutsche zur weiteren Verwendung wegführt.

Die gezeigte Vorrichtung hat den besonderen Vorteil, dass die automatische Entleerung der Transporttaschen kontinuierlich erfolgt. Ein weiterer Vorteil ist die Möglichkeit, die entnommenen Stückguteinheiten getaktet weiterzubearbeiten.

Die vorliegende Erfindung ist in ihrem Umfang nicht auf die hier beschriebenen spezifischen Ausführungsformen beschränkt. Vielmehr ergeben sich für den Fachmann aus der Beschreibung und den dazugehörigen Figuren zusätzlich zu den hier offenbarten Beispielen verschiedene weitere Modifikationen der vorliegenden Erfindung, die ebenfalls in den Schutzbereich der Ansprüche fallen. Zusätzlich werden in der Beschreibung verschiedene Referenzen zitiert, deren Offenbarungsgehalt hiermit in deren Gesamtheit durch Referenz in die Beschreibung mit aufgenommen wird.

## Patentansprüche

1. Vorrichtung (110) zum Entleeren von hängend geförderten Transporttaschen (40), mit einer Mehrzahl von Transporttaschen (40), wobei im hängenden, befüllten Zustand die Transporttaschen eine nach oben offene Tasche (47) mit einer Vorderseite (48) aufweisen;
mit einem Fördersystem (80), insbesondere einem schienengeführten Fördersystem oder einem Förderkettensystem, mit welchem die Transporttaschen (40) hängend entlang einem Förderweg zugeführt werden können,
mit einem umlaufenden Förderband (120) zur Übernahme von in den Transporttaschen transportierten Stückguteinheiten (70),
**dadurch gekennzeichnet, dass**
in einem Kontaktabschnitt (111) der Förderweg des Fördersystems (80) und der Förderweg des Förderbands (120) derart zueinander angeordnet sind, dass der Abstand des Förderwegs des Fördersystems (80) und des Förderwegs des Förderbands (120) kontinuierlich kleiner wird, so dass bei der Förderung einer Transporttasche (40) entlang des Kontaktabschnitts (111) die Vorderseite der Tasche (47) der Transporttasche (40) das Förderband (120) kontaktiert und auf diesem zu liegen kommt und dabei die Transporttasche (40) nach hinten geschwenkt wird;
wobei in einem Übergabeabschnitt (113) der Förderweg des Fördersystems (80) und der Förderweg des Förderbands (120) im Wesentlichen parallel zueinander mit einem gewissen Gefälle nach unten verlaufen, und die Vorderseite (48) der Tasche (47) einer Transporttasche (40) bei der Förderung entlang des Übergabeabschnitts (113) weiterhin auf dem Förderband (120) liegt, so dass die Öffnung der Tasche (47) der Transporttasche (40) schräg nach unten orientiert ist, und in der Tasche (47) der Transporttasche (40) vorhandene Stückguteinheiten (70) schwerkraftgetrieben aus der Tasche (47) auf das Förderband (120) gleiten.

2. Vorrichtung nach Anspruch 1, wobei in einem Trennabschnitt (115) der Abstand des Förderwegs des Fördersystems (80) und des Förderwegs des Förderbands (120) kontinuierlich grösser wird, so dass bei der Förderung einer Transporttasche (40) entlang des Trennabschnitts die entleerte Transporttasche (40) vom Förderband (120) abgehoben wird und in die frei hängende Lage zurück schwenkt.

3. Vorrichtung nach einem der vorangegangenen Ansprüche, wobei die Fördergeschwindigkeiten des Förderbandes (120) und des Fördersystems (80) gleich hoch sind.

4. Vorrichtung nach einem der vorangegangenen Ansprüche, wobei das Förderband (120) eine Mehrzahl von entlang einem Umfang des Förderbands (120) gleichmässig beabstandet angeordneten, nach aussen gerichteten, transversalen Rippen (122) aufweist.

5. Vorrichtung nach Anspruch 4, wobei die Lage der Rippen (122) auf dem Förderband (120) und die Lage der Transporttaschen (40) auf dem Fördersystem (80) zueinander und daraus resultierend eine relative Phasenverschiebung der Rippen (122) in Bezug auf die Transporttaschen (40) so gewählt sind, dass bei der Förderung einer Transporttasche (40) entlang des Kontaktabschnitts (111) eine Rippe (122) zur Transporttasche (40) aufholt, den Bodenabschnitt (45) der Transporttasche (40) kontaktiert und diesen in Förderrichtung (82) nach vorne schiebt, bis die Transporttasche (40) in einen Zustand zum Entleeren übergegangen ist.

6. Vorrichtung nach Anspruch 4 oder 5, wobei der Abstand der Rippen (122) auf dem Förderband (120) so gewählt ist, dass während der Förderung einer Transporttasche (40) entlang des Übergabeabschnitts (113) in der Tasche (47) der Transporttasche (40) vorhandene Stückguteinheiten (70), die schwerkraftgetrieben aus der Tasche (47) auf das Förderband (120) und auf dem Förderband (120) schwerkraftunterstützt weiter nach unten gleiten, von der der Transporttasche (40) vorauslaufenden Rippe (122) aufgefangen und gehalten werden.

7. Vorrichtung nach einem der Ansprüche 4 bis 6, wobei die Rippen (122) des Förderbandes (120) aus einer Vielzahl paralleler Finger bestehen.

8. Vorrichtung nach Anspruch 7, mit einer an das Förderband (120) anschliessenden Rutsche (130), wobei ein oberes Ende (131) der Rutsche Schlitze aufweist, deren Lage den Fingern der Rippen (122) des Förderbandes (120) entsprechen, so dass beim Umlenken des Förderbandes (120) die Finger der Rippen (122) und die Schlitze der Rutsche (130) kämmend miteinander wechselwirken und jeweils hinter einer Rippe (122) zurückgehaltene Stückguteinheiten (70) getaktet freigeben werden, die anschliessend auf der Rutsche (130) schwerkraftgetrieben weiterbefördert werden.

9. Vorrichtung nach Anspruch 8, mit einem weiteren Förderer (140), der die freigegebenen Stückguteinheiten (70) von der Rutsche (130) übernimmt.

10. Vorrichtung nach einem der vorangegangenen Ansprüche, wobei Vibrationsmittel vorgesehen sind, mit welchen mindestens in einem Teilabschnitt des Förderbands (120) die Oberfläche des Förderbands in Vibrationen oder Schwingungen versetzt werden kann.

11. Vorrichtung nach einem der vorangegangenen Ansprüche, wobei die Transporttaschen (40) eine versteifte Rückwand (42) aufweisen.

12. Vorrichtung nach einem der vorangegangenen Ansprüche, wobei die Transporttaschen (40) eine Rückwand (42) und eine Vorderwand (44) umfassen, die über einen Bodenabschnitt (45) derart flexibel miteinander verbunden sind, dass sie zwischen einem ersten Zustand, in welcher sie eine oben offene und von oben befüllbare Tasche (47) bilden, und einem zweiten Zustand, in welcher sie dicht nebeneinander liegen und eine zusammengefaltete Tasche (47) bilden, hin und her bewegbar sind.

13. Vorrichtung nach Anspruch 12, wobei die Rückwand (42) nach oben über die Höhe der Vorderwand (44) hinaus mit einem Tragabschnitt (43) zum Befestigen der Transporttasche (40) an dem Förderelement (20) verlängert ist.

## Claims

1. A device (110) for emptying transport bags (40) conveyed in a suspended manner,
with a plurality of transport bags (40), wherein in the suspended, filled state, the transport bags have a pocket (47) being open at the top and having a front side (48);
with a conveying system (80), in particular a rail-guided conveying system or a conveyor chain system, by which the transport bags (40) can be supplied in a suspended manner along a conveying path,
with a circulating conveyor belt (120) for receiving piece good units (70) transported in the transport bags,
**characterised in that**
in a contact section (111), the conveying path of the conveying system (80) and the conveying path of the conveyor belt (120) are arranged relative to one another in such a way that the distance between the conveying path of the conveying system (80) and the conveying path of the conveyor belt (120) continuously becomes smaller, so that during the conveying of a transport bag (40) along the contact section (111), the front side of the pocket (47) of the transport bag (40) contacts and comes to rest on the conveyor belt (120), and the transport bag (40) is thereby pivoted backwards;
wherein in a transfer section (113) the conveying path of the conveying system (80) and the conveying path of the conveyor belt (120) run essentially in parallel to one another downwards with a certain slope, and the front side (48) of the pocket (47) of a transport bag (40) during the conveying along the transfer section (113) continues to lie on the conveyor belt (120), so that the opening in the pocket (47) of the transport bag (40) is oriented inclined downwards, and piece good units (70) that are present in the pocket (47) of the transport bag (4) slide, driven by gravity, from the pocket (47) onto the conveyor belt (120).

2. The device according to claim 1, wherein in a separating section (115) the distance between the conveying path of the conveying system (80) and the conveying path of the conveyor belt (120) continuously becomes larger, so that during the conveying of a transport bag (40) along the separating section, the emptied transport bag (40) is lifted from the conveyor belt (120) and swivels back into the freely suspended position.

3. The device according to one of the preceding claims, wherein the conveying velocity of the conveyor belt (120) and of the conveying system (80) are equal.

4. The device according to one of the preceding claims, wherein the conveyor belt (120) has a plurality of outwards directed transversal ribs (122) that are uniformly spaced from each other along the circumference of the conveyor belt (120).

5. The device according to claim 4, wherein the location of the ribs (122) on the conveyor belt (120) and the location of the transport bags (40) on the conveying system (80), relative to one another, and resulting from that a relative phase shift of the ribs (122) in relation to the transport bags (40), is selected in such a way that during the conveying of a transport bag (40) along the contact section (111), a rib (122) catches up with the transport bag (40), contacts the base section (45) of the transport bag (40), and pushes it forward in the conveying direction (82) until the transport bag (40) transitions into a state for emptying.

6. The device according to claim 4 or 5, wherein the distance between the ribs (122) on the conveyor belt (120) is selected in such a way that during the conveying of a transport bag (40) along the transfer section (113), piece good units (70) that are present in the pocket (47) of the transport bag (40) and that slide, driven by gravity, from the pocket (47) onto the conveyor belt (120), and, driven by gravity, further downwards on the conveyor belt (120), are caught and held by the rib (122) running ahead of the transport bag (40).

7. The device according to one of claims 4 to 6, wherein the ribs (122) of the conveyor belt (120) consist of a plurality of parallel fingers.

8. The device according to claim 7, with a chute (130) that adjoins the conveyor belt (120), wherein an upper end (131) of the chute has slots whose positions correspond to the fingers of the ribs (122) of the conveyor belt (120), so that when the conveyor belt (120) is deflected, the fingers of the ribs (122) and the slots of the chute (130) combingly mesh with one another, and in each case piece good units (70) held back behind a rib (122) are released in a clocked manner, which subsequently, driven by gravity, are further conveyed on the chute (130).

9. The device according to claim 8, with a further conveyor (140) that receives the released piece good units (70) from the chute (130).

10. The device according to one of the preceding claims, wherein vibration means are provided, by which at least in a partial section of the conveyor belt (120) the surface of the conveyor belt (120) can be set in vibration or oscillation.

11. The device according to one of the preceding claims, wherein the transport bags (40) have a reinforced rear wall (42).

12. The device according to one of the preceding claims, wherein the transport bags (40) comprise a rear wall (42) and a front wall (44) that are flexibly joined together via a base section (45) in such a way that they are movable back and forth between a first state, in which they form a pocket (47) that is open at the top and fillable from the top, and a second state, in which they lie close together and form an interfolded pocket (47).

13. The device according to claim 12, wherein the rear wall (42) is extended upwards beyond the level of the front wall (44), with a support section (43) for fastening the transport bag (40) to the conveying element (20).

## Revendications

1. Dispositif (110) permettant de vider des sacs de transport (40) convoyés de manière suspendue, comportant une pluralité de sacs de transport (40), dans lequel, dans un état suspendu et rempli, les sacs de transport présentent un sac (47) ouvert vers le haut et comportant une face avant (48) ;
comportant un système de convoyage (80), en particulier un système de convoyage guidé sur rails ou un système de convoyage à chaîne, au moyen duquel les sacs de transport (40) peuvent être acheminés de manière suspendue le long d'un trajet de convoyage,
comportant un convoyeur à bande (120) continu permettant le transfert d'unités de colis de détail (70) transportées dans les sacs de transport,
**caractérisé en ce que**
dans une section de contact (111), le trajet de convoyage du système de convoyage (80) et le trajet de convoyage du convoyeur à bande (120) sont disposés l'un par rapport à l'autre de manière telle que la distance entre le trajet de convoyage du système de convoyage (80) et le trajet de convoyage du convoyeur à bande (120) diminue en continu, de sorte que, lors du convoyage d'un sac de transport (40) le long de la section de contact (111), la face avant du sac (47) du sac de transport (40) entre en contact avec le convoyeur à bande (120) et vient se reposer sur celui-ci, et le sac de transport (40) est ainsi pivoté vers l'arrière ;
dans lequel, dans une section de transfert (113), le trajet de convoyage du système de convoyage (80) et le trajet de convoyage du convoyeur à bande (120) s'étendent sensiblement parallèles l'un à l'autre vers le bas avec une certaine inclinaison, et la face avant (48) du sac (47) d'un sac de transport (40) repose également sur le convoyeur à bande (120) lors du convoyage le long de la section de transfert (113), de sorte que l'ouverture du sac (47) du sac de transport (40) est orientée en oblique vers le bas et les unités de colis de détail (70) présentes dans le sac (47) du sac de transport (40) glissent par gravité depuis le sac (47) sur le convoyeur à bande (120).

2. Dispositif selon la revendication 1, dans lequel, dans une section de séparation (115), la distance entre le trajet de convoyage du système de convoyage (80) et le trajet de convoyage du convoyeur à bande (120) augmente en continu, de sorte que, lors du convoyage d'un sac de transport (40) le long de la section de séparation, le sac de transport (40) vidé est soulevé du convoyeur à bande (120) et pivote pour revenir dans la position en suspension libre.

3. Dispositif selon l'une des revendications précédentes, dans lequel les vitesses de convoyage du convoyeur à bande (120) et du système de convoyage (80) sont identiques.

4. Dispositif selon l'une des revendications précédentes, dans lequel le convoyeur à bande (120) présente une pluralité de nervures (122) transversales disposées à intervalles réguliers le long d'une circonférence du convoyeur à bande (120) et orientées vers l'extérieur.

5. Dispositif selon la revendication 4, dans lequel la position des nervures (122) sur le convoyeur à bande (120) et la position des sacs de transport (40) sur le système de convoyage (80) l'une par rapport à l'autre et, par conséquent, un décalage de phase relatif des nervures (122) par rapport aux sacs de transport (40), sont choisis de telle sorte que, lors du convoyage d'un sac de transport (40) le long de la section de contact (111), une nervure (122) rattrape le sac de transport (40), vient en contact avec la section de fond (45) du sac de transport (40) et pousse celle-ci dans le sens de convoyage (82) vers l'avant jusqu'à ce que le sac de transport (40) soit transféré dans un état permettant le vidage.

6. Dispositif selon la revendication 4 ou 5, dans lequel la distance des nervures (122) sur le convoyeur à bande (120) est choisie de sorte que, pendant le convoyage d'un sac de transport (40) le long de la section de transfert (113), les unités de colis de détail (70) présentes dans le sac (47) du sac de transport (40), lesquelles sont entraînées par la gravité depuis le sac (47) sur le convoyeur à bande (120) et glissent ensuite vers le bas à l'aide de la gravité sur le convoyeur à bande (120), sont rattrapées et retenues par la nervure (122) en avant du sac de transport (40).

7. Dispositif selon l'une des revendications 4 à 6, dans lequel les nervures (122) du convoyeur à bande (120) sont constituées d'une pluralité de doigts parallèles.

8. Dispositif selon la revendication 7, comportant une glissière (130) attenante au convoyeur à bande (120), dans lequel une extrémité supérieure (131) de la glissière présente des fentes dont les positions correspondent aux doigts des nervures (122) du convoyeur à bande (120), de sorte que, lors du changement de direction du convoyeur à bande (120), les doigts des nervures (122) et les fentes de la glissière (130) interagissent entre eux en engrènement et les unités de colis de détail (70) respectivement retenues derrière une nervure (122) sont libérées de manière synchronisée, lesquelles unités de colis de détail continuent ensuite à être convoyées par gravité sur la glissière (130).

9. Dispositif selon la revendication 8, comportant un autre appareil de convoyage (140) qui reprend les unités de colis de détail (70) libérées de la glissière (130).

10. Dispositif selon l'une des revendications précédentes, dans lequel des moyens de vibration sont prévus, à l'aide desquels, au moins dans une sous-section du convoyeur à bande (120), la surface du convoyeur à bande peut être soumise à des vibrations ou à des oscillations.

11. Dispositif selon l'une des revendications précédentes, dans lequel les sacs de transport (40) présentent une paroi arrière (42) rigidifiée.

12. Dispositif selon l'une des revendications précédentes, dans lequel les sacs de transport (40) comprennent une paroi arrière (42) et une paroi avant (44) reliées l'une à l'autre de manière flexible par l'intermédiaire d'une section de fond (45) de manière telle qu'elles peuvent être déplacées en va-et-vient entre un premier état, dans lequel elles forment un sac (47) ouvert vers le haut et pouvant être rempli par le haut, et un second état, dans lequel elles sont très proches l'une de l'autre et forment un sac (47) replié.

13. Dispositif selon la revendication 12, dans lequel la paroi arrière (42) est prolongée vers le haut au-dessus de la hauteur de la paroi avant (44) avec une section de support (43) pour la fixation du sac de transport (40) à l'élément de convoyage (20).
